# DEMANDE DE BREVET EUROPEEN

(11) **EP 4 079 478 A1**
(43) Date de publication de la demande: **26.10.2022**
(21) Numéro de dépôt: 21169506.9
(22) Date de dépôt: 20.04.2021
(51) Int. Cl.: B28B 1/00, B28B 1/24, G04D 3/00, C04B 35/486, C04B 35/56, C04B 35/58, C04B 35/622

(54) **PROCÉDÉ D'INJECTION D'UN ARTICLE DÉCORÉ**

(71) Demandeur: Comadur S.A., 2400 Le Locle (CH)
(72) Inventeur: CHOPARD-LALLIER, Pascal, 25500 Montlebon (FR); MOREAU, Julien, 25500 Morteau (FR)
(74) Mandataire: ICB SA

(57) **Abrégé**

La présente invention se rapporte à un procédé d'usinage par ablation laser ou par micro-fraisage d'une structure (5) en relief et/ou en creux sur une empreinte (4) d'un moule (3) d'injection.

La présente invention se rapporte également à un procédé de fabrication d'un article en céramique ou en cermet par injection utilisant ledit moule (3) d'injection pour réaliser un article, et en particulier une lunette de montre, décoré directement lors de l'injection.

## Description

### DOMAINE TECHNIQUE

La présente invention se rapporte à un procédé d'usinage d'une structure en relief et/ou en creux dans un moule pour injection et au procédé de fabrication d'un article décoré obtenu par injection d'une matière céramique ou en cermet au sein dudit moule. Elle se rapporte également à l'article, et plus particulièrement à un composant horloger tel qu'une lunette, réalisé avec ledit procédé de fabrication ainsi qu'au moule obtenu par le procédé d'usinage.

### ART ANTERIEUR

Les composants horlogers en céramique ou en cermet sont obtenus par un procédé d'injection incluant une étape de frittage du corps vert obtenu après injection. Ces composants présentent souvent un décor, tel que des index et des chiffres pour les lunettes, qui est usiné après le procédé d'injection. Ces décors ont pour caractéristique d'être très fins et dès lors de nécessiter une extrême précision pour obtenir une gravure de qualité. Généralement, les décors sont réalisés par ablation laser avec des temps de gravure qui peuvent aller au-delà de l'heure. Cette étape de décoration postérieure à l'injection engendre dès lors des coûts et des délais de fabrication supplémentaires.

### RESUME DE L'INVENTION

La présente invention a pour objet de pallier aux désavantages précités en proposant un nouveau procédé de fabrication où la décoration est réalisée en même temps que l'injection de manière à éviter l'étape de gravure postérieure à l'injection.

A cet effet, la présente invention se rapporte à un procédé de fabrication d'un article comprenant une étape d'injection de la matière dans un moule comprenant une empreinte avec une structure en relief et/ou en creux qui est le négatif du décor de l'article à fabriquer. Selon l'invention, la structure en relief et/ou en creux sur l'empreinte est réalisée par gravure laser ou par micro-fraisage. La structure à réaliser est extrêmement fine avec au moins une dimension inférieure ou égale à 1,5 mm, de préférence à 1 mm et plus préférentiellement à 0.5 mm.

Ainsi, la présente invention se rapporte au procédé d'usinage de l'empreinte du moule et au procédé de fabrication de l'article faisant intervenir une étape de mise à disposition du moule obtenu selon ce procédé d'usinage.

Plus précisément, elle se rapporte au procédé d'usinage par ablation laser ou par micro-fraisage d'une structure en relief et/ou en creux sur une empreinte d'un moule d'injection, ladite structure étant constituée d'un élément ou de plusieurs éléments distincts avec au moins un élément ayant au moins une dimension inférieure ou égale à 1,5 mm, ladite dimension étant choisie parmi une hauteur ou profondeur minimum de l'élément respectivement en relief ou en creux et une distance minimum séparant deux faces opposées dudit élément dans un plan transversal par rapport à ladite hauteur ou profondeur.

Plus précisément, elle se rapporte au procédé de fabrication de l'article comprenant les étapes suivantes :
- Mise à disposition d'un moule d'injection qui comporte au moins une empreinte avec la structure en relief et/ou en creux,
- Mise à disposition d'au moins une matière en céramique ou en cermet,
- Injection de ladite au moins matière dans ladite au moins empreinte du moule pour former un corps vert muni d'un décor qui est le négatif de la structure de l'empreinte,
- Frittage du corps vert pour former une ébauche,
- Finition de l'ébauche pour obtenir l'article.

Le procédé de fabrication de l'article selon l'invention permet ainsi de s'affranchir de l'étape de décoration de l'article postérieure à l'injection. Cela permet de réduire significativement les coûts et délais de fabrication.

L'article décoré lors de l'injection est monobloc sans discontinuité entre le décor et le reste de l'article contrairement à un article décoré en rapportant par brasage ou collage les éléments du décor sur l'article.

Comparativement à un article décoré par ablation laser, l'article avec un décor réalisé lors de l'injection présente un état de surface plus brillant, moins rugueux, sans marques des passages successifs du laser, ce qui permet éventuellement de s'affranchir d'une étape finale de polissage.

D'autres caractéristiques et avantages de la présente invention apparaîtront dans la description suivante d'un mode de réalisation préféré, présenté à titre d'exemple non limitatif en référence aux dessins annexés.

### BREVE DESCRIPTION DES FIGURES

La figure 1 représente une vue en plan d'une lunette fabriquée avec le procédé selon l'invention.
Les figures 2A et 2B représentent respectivement une vue partielle en plan et tridimensionnelle d'une lunette fabriquée avec le procédé selon l'invention, les dimensions étant données en millimètres.
La figure 3A représente une vue tridimensionnelle du moule muni d'une empreinte comportant une structure en creux destinée à former le décor en relief d'une lunette de montre lors du procédé d'injection. La figure 3B est une vue agrandie de ladite empreinte. En variante, la figure 4 représente une vue tridimensionnelle du moule muni d'une empreinte comportant une structure en relief destinée à former le décor en creux d'une lunette de montre lors du procédé d'injection.
La figure 5a représente le corps vert obtenu à l'issue de l'étape d'injection de deux matières distinctes avec les figures 5b et 5c qui montrent séparément les deux matières constituant le corps vert.
La figure 6 est une vue en plan du corps vert de la figure 5a avec en traits pointillés la structure interne du corps vert. La figure 6a est une vue en coupe selon l'axe A-A de la figure 6 avec les flèches montrant la direction du flux de la seconde matière lors de l'injection.
La figure 7a représente l'article obtenu à l'issue d'un procédé de fabrication par injection de deux matières distinctes avec les figures 7b et 7c qui montrent séparément les deux matières constituant l'article.
La figure 8 illustre schématiquement une étape d'usinage de la crête du décor lors de la finition de l'article.

### DESCRIPTION DETAILLEE

La présente invention se rapporte à un procédé d'usinage d'une structure en creux et/ou en relief sur une empreinte de moule destiné à l'injection d'une matière céramique ou en cermet. Elle se rapporte également au moule obtenu par ce procédé d'usinage. Elle se rapporte aussi au procédé de fabrication par injection d'un article, faisant usage de ce moule pour l'injection. La présente invention se rapporte en outre à l'article décoré issu du procédé de fabrication.

Selon l'invention, le décor est en relief et/ou en creux sur l'article. Le décor peut être constitué d'un seul élément tel un sigle ou constitué de plusieurs éléments distincts tels des index et des chiffres. Il est envisageable que certains éléments soient en relief et d'autres en creux au sein du décor.

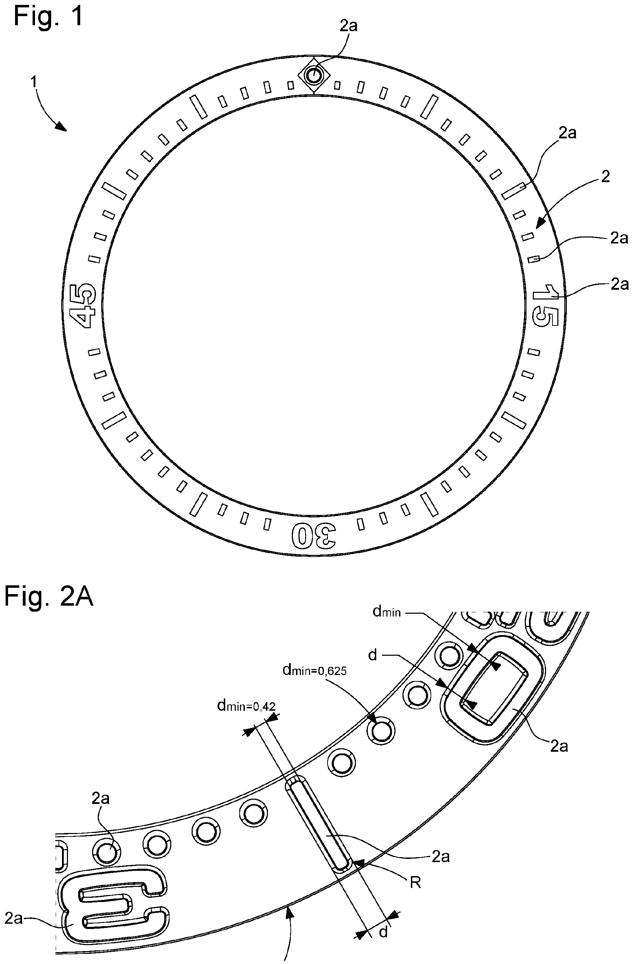

L'article selon l'invention peut être un article décoratif tel qu'un élément constitutif de montres, bijoux, bracelets, etc. Dans le domaine horloger, cet article peut être un composant d'habillage tel qu'une carrure, un fond, une lunette, un poussoir, un maillon de bracelet, un cadran, une aiguille, un index de cadran, etc. Il peut également s'agir d'un composant du mouvement tel qu'une masse oscillante, une platine, etc. A titre illustratif, l'article est une lunette 1 avec un décor 2 en relief formé d'éléments distincts 2a qui sont des index, des chiffres, des ronds, triangles, losanges, etc. tels que représentés à la figure 1. Dans cet exemple, l'ensemble des éléments est représentatif d'une échelle de temps qu'on appellera aussi minuterie. Toujours à titre d'exemple, il pourrait s'agir d'un seul élément qui est un sigle sur une couronne de montre.

L'article est réalisé dans un matériau en cermet ou en céramique. Le matériau peut ainsi être réalisé avec une ou plusieurs céramiques choisies parmi les nitrures, les carbures et les oxydes tels que l'oxyde de zirconium. De même, il peut être réalisé avec des cermets comportant une phase céramique avec des carbures, des nitrures et/ou des oxydes et une phase d'un liant métallique choisi, par exemple, parmi les éléments précieux tels que le ruthénium, le rhodium, le palladium, l'osmium, de l'iridium, le platine, l'or et l'argent.

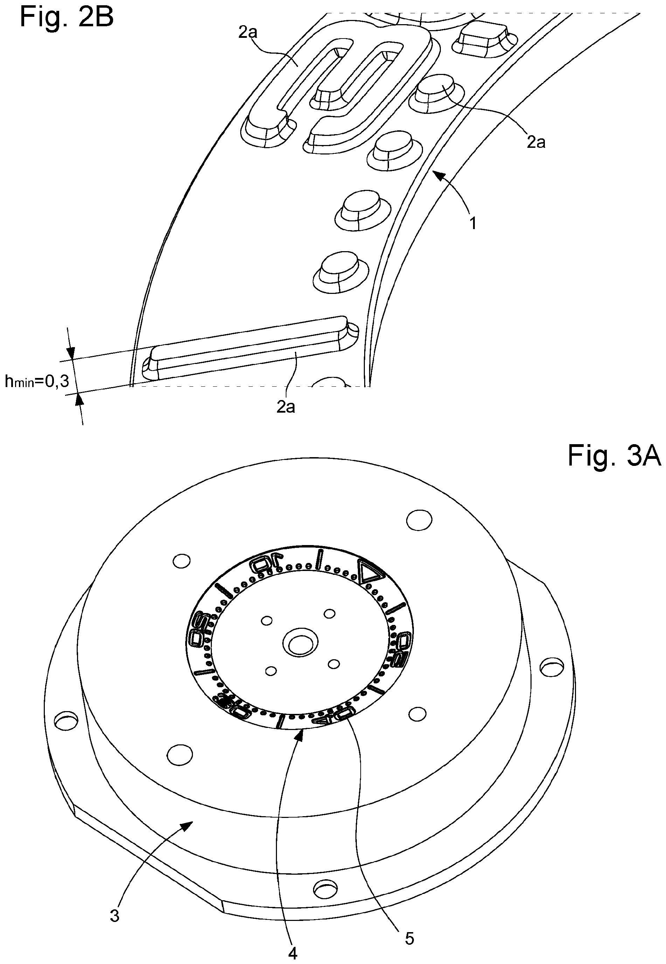

Selon l'invention, au moins un des éléments 2a du décor 2 de l'article est très fin avec au moins une dimension inférieure ou égale à 1,5 mm, de préférence à 1 mm et plus préférentiellement à 0.5 mm (fig.2A et fig.2B). La dimension est choisie parmi une hauteur h et/ou une profondeur minimum de l'élément 2a respectivement en relief et/ou en creux et une distance d minimum séparant deux faces opposées dudit élément 2 dans un plan transversal par rapport à ladite hauteur/profondeur. Pour des géométries simples type circulaire tel que pour les ronds de la minuterie ou type rectangulaire pour les index de la minuterie, la distance minimum est ainsi relative au diamètre et à la largeur respectivement. Pour des géométries plus complexes comme pour un chiffre ou une forme géométrique évidée (anneau, triangle, etc.), il s'agit de l'épaisseur du chiffre ou de la forme géométrique évidée avec comme valeur prise l'épaisseur minimum au sein du chiffre ou de la forme évidée.

La distance d ou la hauteur h/profondeur à considérer est celle minimum. Cela signifie que si la hauteur ou la profondeur est variable au sein de l'élément, c'est la plus petite hauteur/profondeur qui doit être inférieure ou égale à 1.5 mm, de préférence inférieure ou égale à 1 mm et plus préférentiellement inférieure ou égale à 0.5 mm. Dans l'exemple illustré, la hauteur h est la même au sein de l'élément et pour tous les éléments et d'une valeur de 0.3 mm. De même, l'élément peut présenter des dimensions dans le plan transversal qui sont variables selon la hauteur/profondeur. Ainsi, si la distance d minimum est variable entre les différents plans le long de la hauteur/profondeur, c'est la plus petite valeur qui doit être considérée. Dans l'exemple illustré, la base des éléments décoratifs est plus large que le sommet avec une distance minimum de 0.42 mm au sommet de l'index. Le décor est très fin avec également de faibles rayons R de courbure à la jonction entre les faces contiguës de l'élément du décor. Typiquement, les rayons de courbure sont inférieurs ou égaux à 0.1 mm et de préférence inférieurs ou égaux à 0.06 mm.

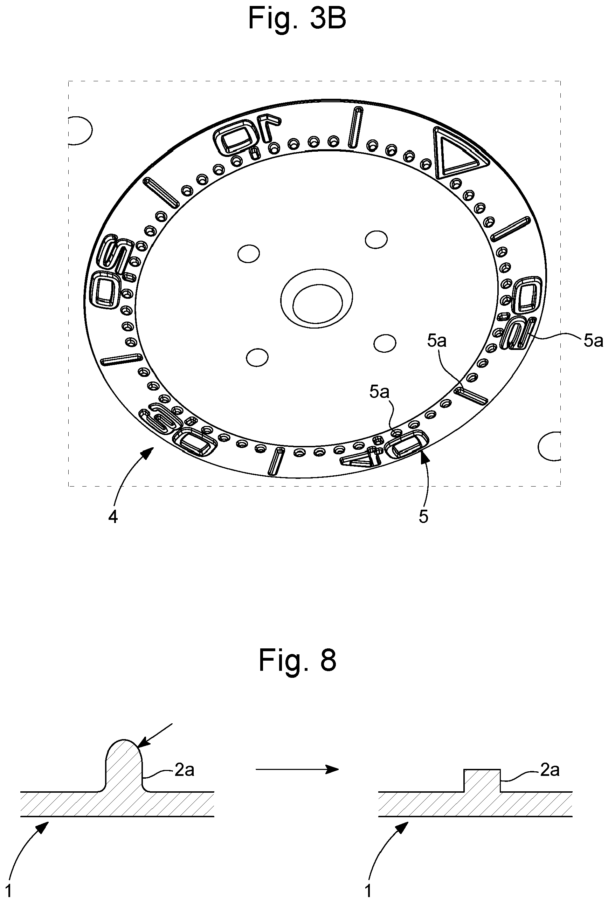

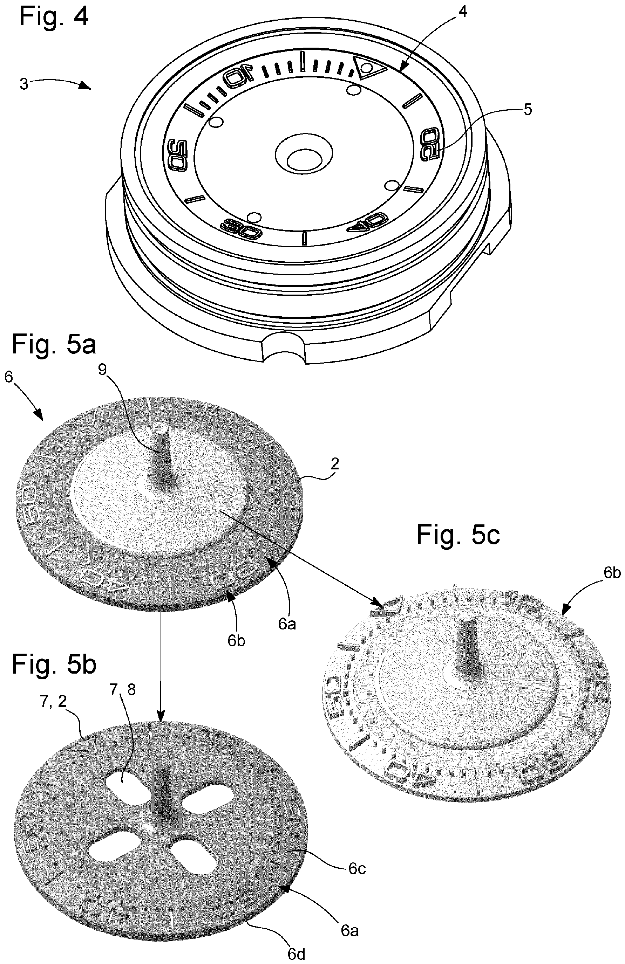

L'empreinte 4 du moule 3 visible aux figures 3A, 3B et 4 comporte une structure 5 en relief et/ou creux constitué d'un élément ou plusieurs éléments distincts 5a qui sont des négatifs du décor à réaliser. Dans l'exemple des figures 3A et 3B, la structure est en creux tandis que dans l'exemple de la figure 4, elle est en relief. De manière semblable au décor de l'article, au moins un élément 5a de la structure 5 a au moins une dimension inférieure ou égale à 1,5 mm, ladite dimension étant choisie parmi une hauteur ou profondeur minimum de l'élément 5a respectivement en relief ou en creux et une distance d minimum séparant deux faces opposées dudit élément 5 dans un plan transversal par rapport à ladite hauteur ou profondeur. Les hauteur/profondeur minimum et distance minimum sont à mesurer comme indiqué pour le ou les éléments du décor de l'article.

L'usinage de la structure de l'empreinte du moule est réalisé par micro-fraisage ou ablation laser. Le micro-fraisage est préférentiellement réalisé avec une fraise torique ou hémisphérique ayant un diamètre compris entre 0.1 et 3 mm et un rayon d'angle en bout de fraise compris entre 0.05 et 0.5 mm. L'ablation laser est préférentiellement réalisée avec un laser à impulsion tel qu'un laser picoseconde, nanoseconde ou femtoseconde. Typiquement, le moule peut être réalisé dans un alliage métallique tel qu'un acier trempé ayant une dureté rockwell HRC supérieure à 50. De façon conventionnelle, l'empreinte du moule avant gravure peut être obtenue par fraisage, tournage, etc.

L'article en cermet ou en céramique est réalisé par injection de matière dans le moule muni de l'empreinte avec la structure en relief et/ou en creux. Le procédé de fabrication de l'article comprend les étapes suivantes :
- Mise à disposition du moule d'injection tel que décrit précédemment qui comporte au moins une empreinte avec la structure en relief et/ou en creux,
- Mise à disposition d'au moins une matière en céramique ou en cermet,
- Injection de ladite au moins matière dans l'empreinte du moule pour former un corps vert muni d'un décor qui est le négatif de la structure de l'empreinte,
- Frittage du corps vert pour former une ébauche,
- Finition de l'ébauche pour obtenir l'article.

Le procédé peut optionnellement comporter une étape de déliantage avant l'étape de frittage si les matières ont été injectées avec un système de liants organiques (paraffine, polyéthylène, etc.).

Lors de l'étape d'injection, l'empreinte est chauffée à une température comprise entre 50°C et 170°C, de préférence entre 60°C et 150°C, pour permettre un bon remplissage de la structure de l'empreinte avec la matière.

L'étape de finition est une étape de polissage et/ou d'usinage. L'usinage au niveau du décor, qui est optionnel, consiste à enlever la crête du ou des éléments 2a du décor lorsqu'il est en relief de manière à réaliser des arêtes marquées à la jonction entre la face supérieure et les flancs de l'élément du décor tel que schématisé à la figure 8.

Le procédé de fabrication de l'article selon l'invention est dépourvu d'une étape de gravure postérieure à l'étape d'injection ou du moins la majorité de la décoration de l'article est réalisée lors de l'injection.

Typiquement, une lunette 1 selon la figure 1 est obtenue par injection d'oxyde de zirconium et par frittage à une température de 1500°C pendant un temps de 30 heures sous une atmosphère oxydante.

Le procédé de fabrication selon l'invention peut également être mis en oeuvre pour réaliser des articles avec plusieurs matières se différenciant, par exemple, par leurs couleurs. L'objectif est alors de réaliser un article avec un décor d'une couleur donnée sur un fond d'une autre couleur. Plus précisément, le décor est en relief sur le fond. L'étape d'injection fait appel à une première empreinte et à une seconde empreinte présentant respectivement une structure en relief et une structure en creux usinées selon le procédé de l'invention. La première empreinte est utilisée lors de l'injection de la première matière et la seconde empreinte est utilisée lors de l'injection de la seconde matière. Le corps vert 6 à l'issue de l'injection des deux matières est représenté à la figure 5a. La première partie 6a du corps vert issu de l'injection de la première matière dans la première empreinte est représentée à la figure 5b. La première partie 6a comporte des évidements 7 traversant son épaisseur. Ces évidements 7 forment, d'une part, un décor 2 et, d'autre part, une ou plusieurs ouvertures 8 pour l'injection de la seconde matière. Ces ouvertures 8 sont préférentiellement présentes sur une portion du corps vert destinée à être enlevée lors de l'usinage de l'article. Pour une lunette, elles sont ainsi présentes dans la partie centrale annulaire de la lunette destinée à être évidée.

Cette première partie 6a du corps vert est obtenue après injection de la première matière dans un moule muni de la première empreinte avec une structure en relief formant le décor et le ou les ouvertures. Pour réaliser des évidements traversant l'épaisseur de la première partie du corps vert, ladite structure a une hauteur supérieure à la hauteur de remplissage de la matière dans la première empreinte.

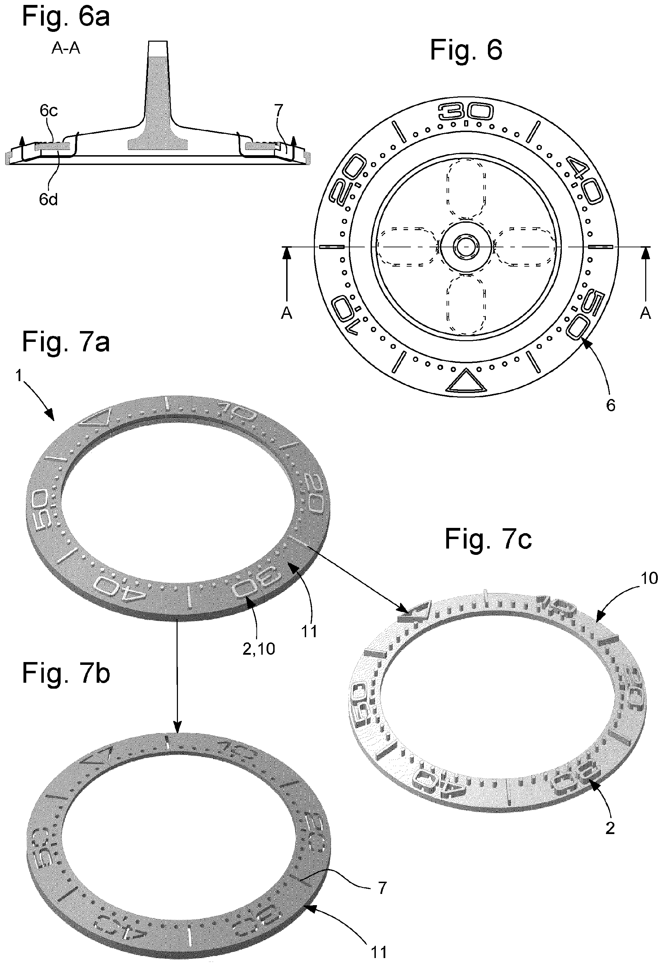

La seconde partie 6b du corps vert est obtenue par injection de la seconde matière via les ouvertures 8 depuis la face supérieure 6c vers la face inférieure 6d de la première partie 6a. Comme schématisé à la figure 6a par les flèches, la seconde matière remonte ensuite depuis la face inférieure 6d vers la face supérieure 6c à travers les évidements 7 du décor 2 jusque dans la seconde empreinte (non représentée). Cette dernière présente une structure en creux disposée en vis-à-vis du décor de la première partie du corps vert, ladite structure ayant une forme similaire à celle du décor de la première partie du corps vert. Le corps vert 6 formé de la première partie 6a et de la seconde partie 6b à la figure 5a présente ainsi un décor 2 réalisé avec la seconde matière en relief sur la première matière. Ensuite, pour former une lunette, de manière conventionnelle, la carotte 9 est coupée et le diamètre intérieur de la lunette est creusé pour réaliser l'article de la figure 7a.

Le procédé de fabrication a été illustré pour un article comprenant deux matières distinctes mais il pourrait s'agir d'un article comprenant 3, 4, etc. matières distinctes avec réalisation de plusieurs décors de couleurs différentes.

L'invention se rapporte également à l'article issu du procédé de fabrication.

Pour un article multicolore obtenu selon le procédé décrit ci-avant (fig.7a-7c), l'article 1 présente une base 10 d'une couleur munie du décor 2 en relief, surmontée d'une partie, dite supérieure, 11 d'une autre couleur munie d'évidements 7 de forme complémentaire au décor 2 de la base 10, la partie supérieure 11 étant imbriquée avec la base 10 via le décor 2 traversant les évidements 7 pour se dresser en relief sur la partie supérieure 11.

### LÉGENDE

1. Article ou Lunette
2. Décor
   a. Elément du décor
3. Moule d'injection
4. Empreinte
5. Structure en relief et/ou en creux de l'empreinte
   a. Elément de la structure
6. Corps vert
   a. Première partie avec la première matière
   b. Seconde partie avec la seconde matière
   c. Face supérieure de la première partie
   d. Face inférieure de la seconde partie
7. Evidement
8. Ouverture
9. Carotte
10. Base de l'article
11. Partie supérieure de l'article

## Revendications

1. Procédé d'usinage par ablation laser ou par micro-fraisage d'une structure (5) en relief et/ou en creux sur une empreinte (4) d'un moule d'injection (3), ladite structure (5) étant constituée d'un élément ou de plusieurs éléments distincts (5a) avec au moins un élément (5a) ayant au moins une dimension inférieure ou égale à 1,5 mm, ladite dimension étant choisie parmi une hauteur (h) ou profondeur minimum de l'élément (5a) respectivement en relief ou en creux et une distance (d) minimum séparant deux faces opposées dudit élément (5) dans un plan transversal par rapport à ladite hauteur ou profondeur.

2. Procédé d'usinage selon la revendication précédente, **caractérisé en ce que** ladite au moins dimension est inférieure ou égale à 1 mm.

3. Procédé d'usinage selon l'une des revendications précédentes, **caractérisé en ce que** ladite au moins dimension est inférieure ou égale à 0.5 mm.

4. Procédé d'usinage selon l'une des revendications précédentes, **caractérisé en ce qu'**au moins un élément (5a) a un rayon R de courbure inférieur ou égal à 0.1 mm à la jonction entre deux faces contiguës de l'élément (5a) dans ledit plan transversal.

5. Procédé d'usinage selon l'une des revendications précédentes, **caractérisé en ce qu'**au moins un élément (5a) a un rayon R de courbure inférieur ou égal à 0.06 mm à la jonction entre deux faces contiguës de l'élément (5a) dans ledit plan transversal.

6. Moule d'injection (3) **caractérisé en ce qu'**il est muni d'au moins une empreinte (4) présentant une structure (5) en relief et/ou en creux, ladite structure (5) étant constituée d'un élément ou de plusieurs éléments distincts (5a) avec au moins un élément (5a) ayant au moins une dimension inférieure ou égale à 1.5 mm, de préférence à 1 mm, plus préférentiellement à 0.5 mm, ladite dimension étant choisie parmi une hauteur (h) ou profondeur minimum de l'élément (5a) respectivement en relief ou en creux et une distance (d) minimum séparant deux faces opposées dudit élément (5) dans un plan transversal par rapport à ladite hauteur (h) ou profondeur.

7. Procédé de fabrication d'un article en céramique ou en cermet par injection comprenant les étapes suivantes :
- Mise à disposition du moule d'injection (3) selon la revendication 6,
- Mise à disposition d'au moins une matière en céramique ou en cermet,
- Injection de ladite au moins matière dans ladite au moins empreinte (4) du moule d'injection (3) pour former un corps vert (6) muni d'un décor (2) qui est le négatif de la structure (5) de l'empreinte,
- Frittage du corps vert (6) pour former une ébauche,
- Finition de l'ébauche pour obtenir l'article.

8. Procédé de fabrication selon la revendication précédente, **caractérisé en ce que** le moule d'injection (3) est muni de deux empreintes avec une première empreinte présentant une structure (5) en relief et une seconde empreinte présentant une structure (5) en creux, et **en ce que** deux matières distinctes sont mises à disposition avec une première matière injectée dans la première empreinte pour former une première partie (6a) du corps vert (6) et une seconde matière injectée au travers de la première matière jusque dans la seconde empreinte pour former une seconde partie (6b) du corps vert (6).

9. Procédé de fabrication selon la revendication précédente, **caractérisé en ce que** la première partie (6a) du corps vert (6) comporte des évidements (7) traversant l'épaisseur de ladite première partie (6a), lesdits évidements (7) formant le décor (2) et au moins une ouverture (8), ladite seconde matière étant injectée au travers de l'ouverture (8) avec un flux dans une direction donnée avant de traverser les évidements (7) du décor (2) dans une direction opposée à la direction donnée pour aboutir dans la seconde empreinte munie d'une structure (5) de même forme que le décor (2) de la première partie (6a) du corps vert (6), ladite structure (5) étant disposée en vis-à-vis du décor (2) de la première partie (6a) lors de l'injection.

10. Procédé de fabrication selon la revendication précédente, **caractérisé en ce que** l'ouverture (8) est présente sur une portion de la première partie (6a) du corps vert (6) destinée à être enlevée lors de l'étape de finition de l'ébauche.

11. Procédé de fabrication selon l'une des revendications 7 à 10, **caractérisé en ce que** la première et la seconde matière se distinguent par leur couleur.

12. Procédé de fabrication selon l'une des revendications 7 à 11, **caractérisé en ce que**, lors de l'étape d'injection, ladite au moins empreinte (4) est chauffée à une température comprise entre 50°C et 170°C, de préférence entre 60°C et 150°C, pour permettre le remplissage complet de la structure (5) de l'empreinte (4) avec la matière.

13. Procédé de fabrication selon l'une des revendications 7 à 12, **caractérisé en ce que** l'étape de finition est une étape de polissage et/ou d'usinage, l'étape d'usinage consistant à enlever la crête d'au moins un élément (2a) du décor en relief de manière à réaliser des arêtes à la jonction entre la face supérieure dudit élément (2a) et les flancs dudit élément (2a).

14. Article en cermet ou en céramique réalisé par injection selon le procédé de fabrication de l'une des revendications 7 à 13.

15. Article selon la revendication précédente, **caractérisé en ce qu'**il est formé d'au moins deux couleurs distinctes, avec le décor (2) d'une première couleur en relief sur un fond d'une deuxième couleur.

16. Article selon la revendication précédente, **caractérisé en ce qu'**il présente une base (10) réalisée dans la première couleur et munie du décor (2) en relief, ladite base (10) étant surmontée d'une partie (11), dite supérieure, réalisée dans la deuxième couleur, ladite partie supérieure (11) étant munie d'évidements (7) traversants, de forme complémentaire au décor (2) de la base (10), la partie supérieure (11) étant superposée sur la base (10) avec le décor (2) traversant les évidements (7) pour se dresser en relief sur la partie supérieure (11).

17. Article selon l'une des revendications 14 à 16, **caractérisé en ce que** le composant horloger d'habillage ou du mouvement est choisi parmi la liste comprenant une carrure, un fond, une lunette, un poussoir, un maillon de bracelet, un cadran, une aiguille, un index de cadran, une masse oscillante et une platine.
